Europäisches Patentamt

European Patent Office

Office européen des brevets

(11) Publication number: **0 208 457**
**A2**

## EUROPEAN PATENT APPLICATION

(21) Application number: 86304840.1

(22) Date of filing: 24.06.86

(51) Int. Cl.⁴: **G 06 F 15/16**

(30) Priority: 09.07.85 GB 8517376

(43) Date of publication of application:
14.01.87 Bulletin 87/3

(84) Designated Contracting States:
DE FR NL

(71) Applicant: NATIONAL RESEARCH DEVELOPMENT
CORPORATION
101 Newington Causeway
London SE1 6BU(GB)

(72) Inventor: Jesshope, Christopher Roger Dept. of
Electronics
University of Southampton
Southampton SO9 SNH(GB)

(74) Representative: Pears, David Ashley et al,
REDDIE & GROSE 16 Theobalds Road
London WC1X 8PL(GB)

(54) A processor array.

(57) A processor array comprises a plurality of identical processing elements 18, 28 etc. each capable of combining operands to produce results and, after arithmetic operations, carry data.

Each element comprises means for selecting the element from which it takes an input, which may be an operand or carry data. This enables the array to be configured in a versatile manner to form composite processing units. Amongst those possible are a cyclic 10-bit shift register 22, a 9-bit ripple-carry adder 20, one bit processing units 28 for bit-serial processing, a two-bit ripple-carry adder 26 and a two element unit 24 whose elements exchange data.

FIG.4

EP 0 208 457 A2

0208457

## A PROCESSOR ARRAY

The present invention relates to processor arrays comprising a plurality of processing elements each capable of combining operands to produce results and carry data, control means operable to control the processing elements by supplying single instructions to all of the elements simultaneously, and a connection network connecting each processing element to a plurality of other processing elements for the transmission of data between elements. The processor array is a computer design which makes use of a large array of processors, or "processing elements", each of which is capable of processing input data independently of the other processing elements in the array. The processing elements are all controlled by a central control unit. Commonly, the central control unit broadcasts the same instructions, known as global instructions, simultaneously to all of the processing elements, which execute the instructions on respective data. The array is then said to be operating "in parallel".

The processing elements are interconnected by data paths which allow a result of an operation performed by one processing element to be passed to another element. Normally, only neighbouring elements are connected in this way.

The most common architecture used for processor array computers consists of single-bit processing elements arranged to form a 2-dimensional array. For instance, they may be arranged to form a square lattice, with each element being connected to its nearest four or eight neighbours. The data paths between elements are opened and closed by a switching network which enables data to be routed through the array along chains of processing elements.

Some previous proposals have extended the possible applications of processor arrays by storing in each processing element a single bit of control information, known as an activity bit. The setting of the activity bit determines whether the corresponding processing element is enabled or disabled to respond to global instructions. The activity bit can be set according to the result of a previous operation, and so allows conditional instructions to be executed.

A data word having more than one bit may be processed in an array of single-bit processing elements by controlling a single element to perform an appropriate sequence of operations on the bits of the word. This is known as bit-serial processing. The reduction in processing speed which is a consequence of serial processing is compensated for by the ability of the array to process a large amount of data at one time, each data word being processed by a respective element of the array. However, it is naturally important to ensure that the processing resources available are used to best effect, but this is not always possible. The parallelism of the array, that is, the maximum number of data words which can be processed simultaneously, is determined when the array is built. In contrast, the parallelism required, that is, the number of data words simultaneously to be processed, depends on the problem being solved. The parallelism required may vary between problems and at different stages in the solution of a problem. Consequently, matching the parallelism required to the parallelism available, so as to use the resources with maximum efficiency, is a complex operation which may become excessively arduous. If the problem does not fit the array, some inefficiencies will inevitably occur, either because some processing elements lie idle or because a large amount of processing power is used simply trying to adapt the problem to fit the array.

Several references in the literature describe arrays whose parallelism may be changed during use. Flanders et al ("Efficient High Speed Computing with the Distributed Array Processor", High Speed Computer and Algorithm Organisation, Academic Press, London 1977) describe an array in which a row of processing elements may be linked together to form a bit parallel processor in which all of the bits of an operand are processed simultaneously, by respective processing elements, and carry data "ripples" between the elements, along the row. Another proposal which is similar in this respect is described by Arvind et al ("A VLSI Chip for real-time image processing", Proc. IEEE International Symposium on Circuits and Systems, May 1983, pp 405-408).

The present inventor has previously described ("A Reconfigurable Processor Array for VLSI', Proc. Workshop on Advances in the use of Vector and Array Processors, Bristol 1982) an array in which each processing element stores a bit of control information in addition to an activity bit, and known as a reconfiguration control bit. A processing element in a row of elements performing bit parallel processing rejects or accepts carry data from its neighbour according to the setting of the reconfiguration control bit. The rows of elements can therefore be split into processing units of arbitrary length.

Kondo et al ("An LSI Adaptive Array Processor", IEEE Journal of Solid-State Circuits, Vol SC-18, No. 2, April 1983, p 147) describe an array in which each processing element may send a carry bit to its left or lower neighbouring element and may accept or reject a carry bit sent by its upper or right neighbouring element. This arrangement enables rows or columns performing bit-parallel operations to be sub-divided. A combination of both types of subdivision enables operations, called "block operations" by Kondo, to be performed. For instance, several data words may be stored in a 2-dimensional block of processing elements, each word being stored along a respective row of elements, the words being added by a combination of bit-parallel, ripple carry additions along the rows and down the columns of the block, to produce the sum of all of the words, stored along the bottom row of the block.

The object of the present invention is to provide a processor array which is versatile enough to be used with a wide range of problems and which reduces the difficulty of matching the parallelism required and the parallelism available.

The present invention is characterised in that each element can send operands or carry data, selectively, to any other element to which it is connected by the connection network, and in that each element comprises storage means for storing a direction selection code and direction selection means responsive to the contents of the storage means to select the element from which transmitted data is accepted or the element to which data is transmitted.

'Operand' is used here to mean either unprocessed data or result data stored after an operation, for further processing or transmission to another element. The term is used in contrast to the terms 'carry data' and 'control data'.

The processing elements of a processor array according to the invention may be single-bit processing elements. The array can then be considered as a pool of single bit bit-slices which can be linked together under program control, by storing appropriate direction selection codes in the elements, to form an array of multi-bit processing units of almost arbitrary size and shape. That is, the shape of a line of processing elements forming a processing unit may meander through the array with no constraints on its shape other than those applied by the layout of the connection network. Thus, the configuration of the array is very flexible, thereby greatly simplifying the problem of matching the array to a problem to be solved.

Preferably, each processing element comprises further storage means for storing a further direction selection code and further direction selection means responsive to the further direction selection code and wherein the direction selection means of each processing element select the element from which data is accepted and the element to which data is transmitted in dependence on the stored direction selection codes. The use of input and output selection codes together, provides a useful symmetry in the processing element. This can be used, for instance, to reverse the direction of data flow in a processing unit simply by interchanging the significance of the stored codes, so that the input selection code becomes the output selection code and vice-versa.

Each connection between processing elements preferably comprises two data paths, one for each direction of transfer. This prevents data collisions occurring, for instance when two elements wish to exchange data.

Preferably, the processing elements are interconnected by connections extending in directions which are so chosen that closed rings of intercommunicating elements may be formed by the operation of the direction selection means. For instance, the processing elements may form a two-dimensional array such as a square array, with each processing element being connected to the four elements which are its nearest neighbours on the lattice. The ability to form closed rings of processing elements increases the range of functions which a processing unit may perform to include certain important functions to be described below.

In a preferred embodiment, each processing element comprises a configuration store which stores an instruction from a set of configuration instructions, and comprises means responsive to the stored configuration instruction to modify the response of the processing element to instructions from the control means, and wherein respective configuration instructions determine whether a processing element acts as the most significant or the least significant portion of, or a portion of intermediate significance in a processing unit formed by a chain of processing elements each of which communicates with the elements to either side of it in the chain.   Preferably one configuration instruction causes the processing element in which it is stored to transmit received data without processing.

The provision of direction selection means and configuration means within the elements enable local control of operations.   For instance, when words of data are being processed in the array, the direction of propagation of data and boundary effects at the edges of processing units can be locally determined for arithmetic and shift operations.   This local control can also be used for other purposes.   It can be used to allow efficient manipulation of a wide range of data structures, such as strings, trees and arrays, not necessarily conformal within the array of processors.   Local control of data flow with a structure and efficient management of the boundaries of the structure are then possible.

One embodiment of the present invention will now be described more fully, by way of example, with reference to the accompanying drawings, in which:

Fig. 1 shows part of a known processor array;

Fig. 2 shows an array according to the invention, arranged to prevent data collisions;

Fig. 3 is a simplified, schematic representation of a processing element for use in an array according to the invention;

Fig. 4 shows part of an array according to the invention, configured to form various types of processing unit; ,

Figs. 5 to 12 show further examples of types of processing unit which can be configured;   and

Fig. 13 shows, in more detail, the processing element of

0208457

Fig. 3.

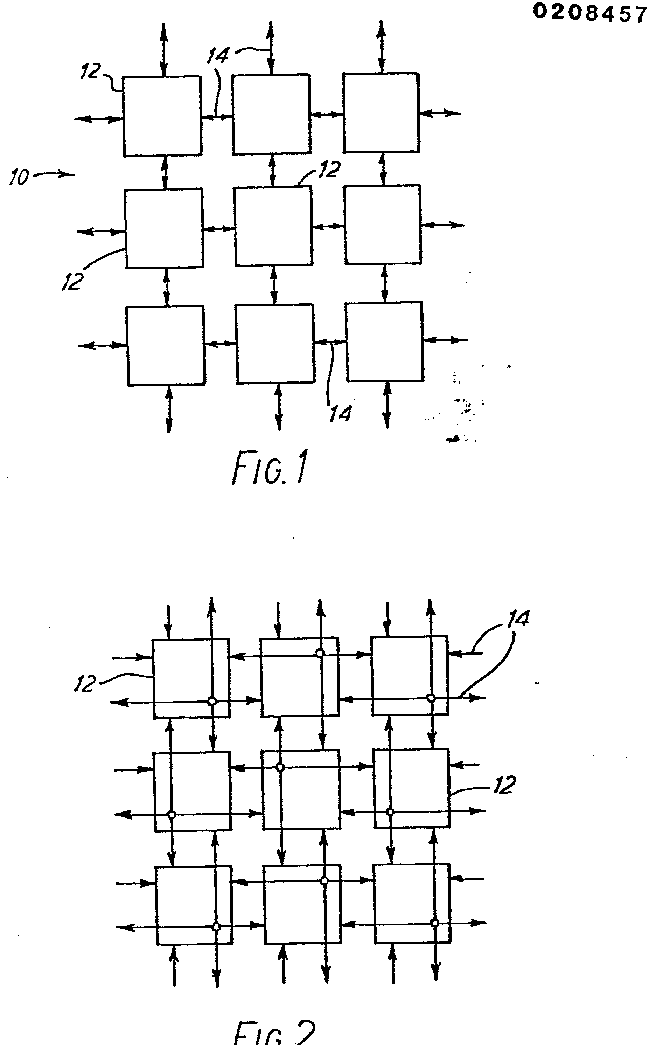

Fig. 1 shows part of a processor array 10 similar to those
described in the prior art discussed above. The array 10 comprises
processing elements 12 laid out to form a square lattice. A
connection network provides a connection between each element 12 and
its four nearest neighbours. The connections are indicated in
Fig. 1 by double-headed arrows 14, used to indicate that data can be
passed in either direction along the connections. The condition
shown in Fig. 1, in which each processing element is connected to
two other elements in opposite directions in each dimension of the
array, is the condition normally adopted in the design of processor
arrays. In principle, elements could be connected to any number or
all of the other elements, but the complexity of wiring required
quickly increases with an increase in the number of connections
provided for each element. Each processing element also has a
section of memory, from which operands can be read and into which
results can be stored. A switch, not shown in the drawing, is
associated with each connection, to open and close the connection,
thereby controlling the data routes available at any given time.

When the processor array is controlled so that all information
flows in the same direction at any one time, which is the case in
the proposals of Arvind et al and Flanders et al., the connection
network shown in Fig. 1 is efficient. In particular, there is no
possibility of collisions occurring between data being driven in
opposite directions along the same connection.

In an array according to the present invention the use of
direction selection codes enables two processing elements to
exchange data, for instance by each selecting the other as their
source of input data. Data exchange over the same connection would
lead to data collision.

Two possibilities exist for the resolution of the problem. In
the first, two data paths are provided by each connection. Each
element can then drive data out in all directions if the elements
select the input direction, or can accept input from any direction
if the elements select output directions, without data collisions
occurring.

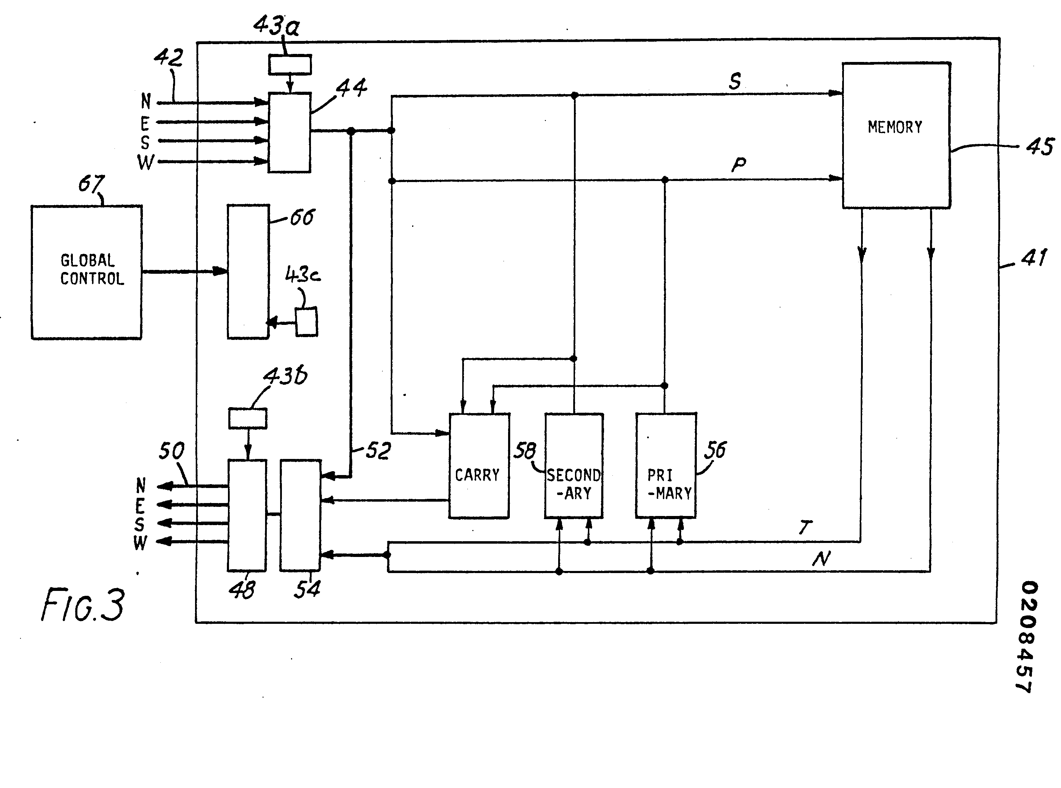

This alternative is shown in Fig. 2, in which arrowheads are used to indicate the direction of data flow over each connection. Each element drives data in all four available directions, and receives data from all four directions, although data from only one direction is accepted as an input.

Alternatively, each processing element could select both input and output directions. If only one data path is provided by each connection, data collisions would still occur when two elements exchange data.

The preferred embodiment of the present invention combines the two approaches by selecting input and output directions and providing two data paths in each connection.

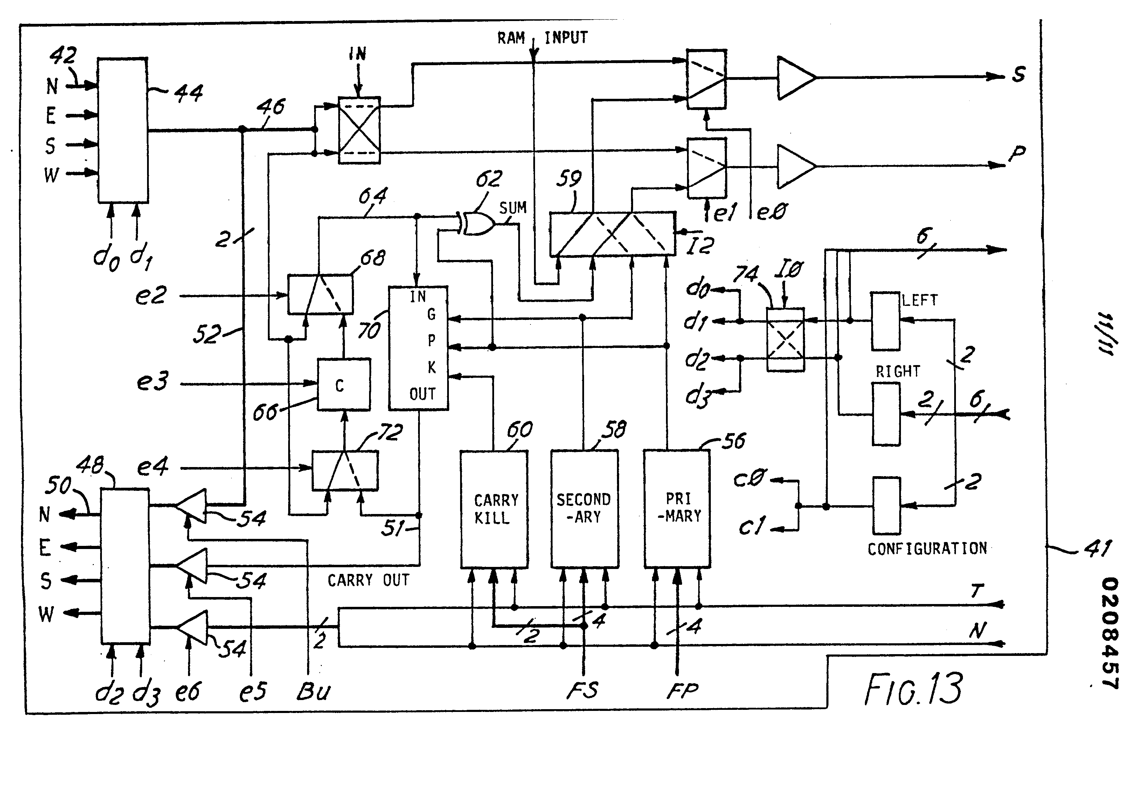

Fig. 3 shows, schematically, a processing element 41 of the preferred embodiment. The processing element 41 is shown in more detail in Fig. 13 and is described in more detail later, with reference to that figure. The element 41 has four input lines 42, arriving from respective neighbours. The direction of the neighbours with respect to the element shown is indicated by the compass points N, E, S, W shown next to the appropriate line. The element also has four output lines 50 going to respective neighbours. Thus, two data paths exist between each connected pair of elements. Each data path 42, 50 is two bits wide.

The element stores two direction selection codes, in stores 43a, 43b. The code in store 43a controls direction selection means 44 to select one of the input lines for connection to the circuitry within the element 41. The code stored in the store 43b controls the output direction selection means 48 to select the output line 50 along which the output of the element is to be sent.

An input from another element may be either two operand bits, during operations in which data is being moved around the array, or a carry bit, during bit-parallel arithmetic operations.

Operand data arriving over the selected input line 42 provides two component bits which pass along the result buses P and S to the memory 45 of the element 41. Carry data is routed to carry circuitry labelled "Carry" in Fig. 3.

Two bits of operand data, normally corresponding bits of respective operands, may be read from the memory 45 along the operand buses T and N. Operand bits on the buses T and N may be

used in two waves. They may serve as inputs to logic circuitry 56 which can combine them according to logical functions to generate a result which is stored in the memory 45 over the result bus P. Secondary logic circuitry 58 can perform logical functions on operands on T and N independently of the circuitry 56 and store its result over the bus S. The primary, secondary and carry circuits 56,58, "Carry" can co-operate to perform arithmetic operations on operands on T and N, to produce a result stored over P. During arithmetic operations, the circuitry "CARRY" takes into account any carry data from the earier operations. This may have been stored in the circuitry, or received from another element. The carry circuitry operates with the circuits 56,58 to produce carry data for later operations.

Data on the buses T and N may alternatively form the output of the element 41, for transmission over the selected line 50 to one of the neighbouring elements.

Two other types of output are possible. Carry data produced during arithmetic operations can be sent to any of the neighbouring elements, and an input from a line 42 to the element 41 can be sent straight to the output circuitry, over the bus 52, without processing. It can be sent to the memory 45, simultaneously. A gating circuit 54 selects whether the output is operand data from the memory 54, carry data from the carry circuitry, or input data on the bus 52.

Global instructions are received by a control circuit 66 from a global controller 67 which supplies instructions simultaneously to all of the elements in the array. The circuit 66 decodes the global instructions and a configuration code stored in a store 43c, to provide control signals for the various components of the element. The control signals are sent to the components over control lines which are not shown in Fig. 3 for reasons of clarity. The global controller 67 is not shown in the remaining figures, in the interests of clarity.

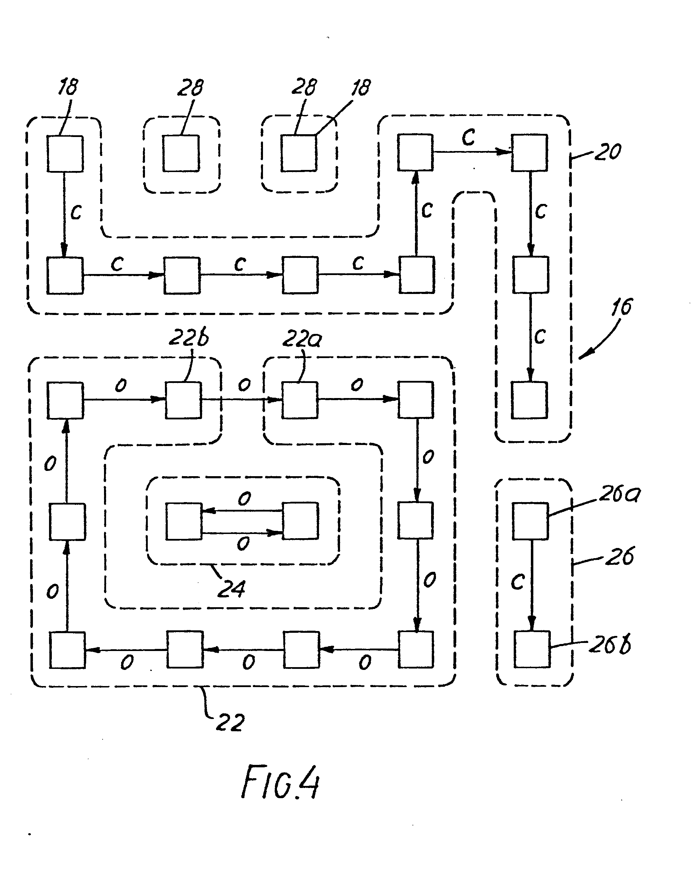

Fig. 4 schematically shows part of a processor array 16 according to the invention, and comprising one-bit processing elements 18 arranged on a square lattice. In Fig. 4, only data routes which have been selected to convey data are shown. The type of data being transmitted is indicated by the letters C (for "carry") and O (for "operand") next to the corresponding arrow.

The ability of the processing units to determine the direction of information flow enables groups of processing elements to link themselves together in a wide variety of ways, to form composite units, here called processing units. The process of linking elements together is here referred to as configuring the array.

The portion of the array shown in Fig. 4 has been configured to provide a variety of types of processing unit. Each unit is indicated by a dotted line surrounding the processing elements 18 forming the unit.

One processing unit 20 is formed by a chain of nine processing elements, and so forms a 9-bit processor. The unit 20 may be used (as shown) in 9-bit, bit parallel arithmetic operations involving a carry rippling along the unit 20. Alternatively, the unit 20 could be used as a non-recycling 9-bit shift register, for instance, by passing operand data from element to element along the chain.

A chain of processing elements forming a single processing unit may meander through the array following any course, by storing appropriate direction selection codes in the processing elements. The only limitation on the shape of the unit is imposed by the connection network. In the present case, the limitation is that adjacent processing elements in a processing unit must be nearest neighbours in the array because only nearest neighbours are connected.

Another processing unit 22 shown in Fig. 4 is formed by a closed loop of ten processing elements each sending operand data to a neighbour. The element 22a at one end of the unit 22 receives operand data from the element 22b at the other end of the unit 22. The unit 22 therefore acts as a 10-bit recycling shift register.

Another processing unit 24 is a 2-bit unit enclosed by the processing unit 22. The elements of the unit 24 are shown exchanging operand data. These are the only elements shown using both data paths in a single connection, although two paths are available in every connection.

A 2-bit processing unit 26 can perform bit-parallel arithmetic operations with a carry bit being sent from the upper element 26a to

0208457

the lower element 26b of the unit.

Finally, two elements 28 are configured as one-bit processing units, such as would be used for bit-serial operations.

The use of both input and output direction selection codes provides a useful symmetry in the array. For instance, the processing unit 22 is shown shifting data in a clockwise direction. The shifting direction can be reversed simply by interchanging the significance of the stored direction selection codes, so that the input direction selection code becomes the output direction selection code and vice-versa.

In practice, the storage for the direction selection codes might not be distributed throughout the array, but rather form a single block of memory. The memory would be notionally divided into sections, each section uniquely associated with a single processing element. In this sense, each section of memory could be considered as part of the corresponding processing element. Access to the memory would also be available to control circuits outside the array. The configuration of the array could then be set and changed rapidly by these control circuits loading direction selection codes into the appropriate regions of memory. Sections of the memory would also be allocated to the processing elements to allow them to read operands for processing, and to store results.

In the interests of maximising the integration of circuits and minimising the number and length of data and control lines, it will often be preferable to provide memory within each processing element, as shown in the drawings.

However memory is arranged, input to a processing element can be from a neighbouring element or from its associated memory, or from both. For instance, during arithmetic operations in a multi-bit processing unit, operands would be read from memory and combined with a carry transmitted from a neighbouring element (except at the least significant end of the unit) to produce a result for storage in the memory and a carry for transmission to another element.

During a shifting operation, data would be read from memory, transmitted to a neighbouring element and stored in the memory of the recipient.

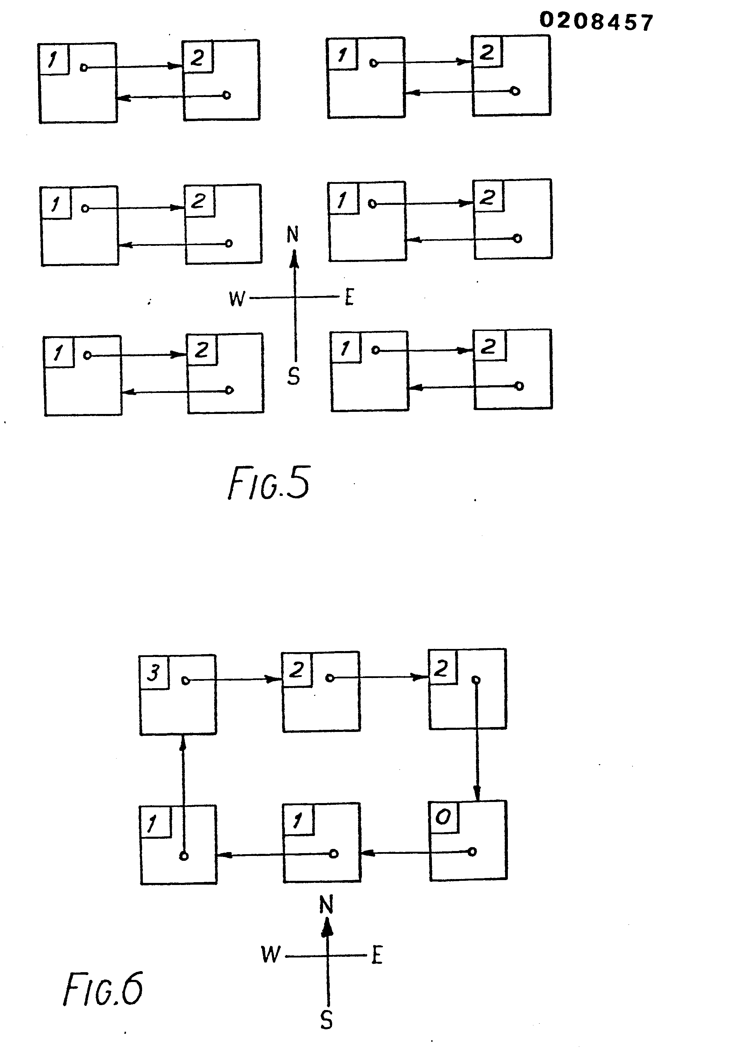

Further examples of how the array may be configured are shown in Figs. 5 and 6.    In these figures, a numeral is shown in each
processing element.    These numerals represent input direction
selection codes encoded according to Table 1 below.    The codes may
be stored in practice as two bits $d_1$ and $d_0$ as shown in the table.
The output direction selection codes are not shown in the figures,
but are also two bit binary codes according to Table 1, and set to
match (but not equal) the input direction selection codes, so that a
first processing element which selects a second processing element
as a recipient is in turn selected by the second processing element
as a sender of data.

## Table 1

| Direction $d_1$ | Field $d_0$ | Value | Direction |
|---|---|---|---|
| 0 | 0 | 0 | North |
| 0 | 1 | 1 | East |
| 1 | 0 | 2 | West |
| 1 | 1 | 3 | South |

Fig. 5 shows twelve processing elements configured as six processing units each comprising two processing elements.    The
processing elements of each unit exchange data, and so the overall
effect of this configuration is for the data stored in adjacent
columns of the array to change places.

Fig. 6 shows a single, closed loop processing unit comprising
six processing elements.    This could be used as a recycling shift
register or for ripple carry processing in which the overflow carry
resulting at the most significant element is available to the least
significant element at the end of the operation.

The processor array so far described allows great flexibility
in the way the processing elements are connected together because
the direction of data transfer is controlled at each processing
element and any data stored or generated by an element can be passed
to any other element to which it is connected.

The preferred embodiment also stores a further instruction in
each processing element, known as the configuration instruction.
This instruction modifies the response of the associated processing
element to global instructions, for instance to determine any special action which may be required at the edges of a processing unit. The configuration instruction determines whether the processing element acts as an interior element of a processing unit having another element to either side, or as the element at the most or least significant edge of the processing unit. For instance, during ripple carry arithmetic, an interior element will receive and propogate carry data, the most significant bit will receive but not propogate carry data, and the least significant bit will propogate but not accept carry data.

An alternative which may be more convenient in some circumstances, is to control whether or not an element takes account of received carry data, rather than whether or not it sends and receives carry data. In that case, only the least significant bit (which does not take account of a received carry) must be identified. The nature of direction selection operations would then be uniform throughout the unit.

The configuration codes can conveniently be encoded as two-bit binary words stored in the processing elements. This provides four distinct configuration codes. Three are used to configure elements to act as interior, least significant or most significant bits. It has been found advantageous to use the fourth to configure elements as data buses, in which the input is connected directly to the output so that data is passed without processing. The data can also be stored by each processing element through which it passes. This enables a single bit sent from the least significant processing element of a processing unit to be distributed to the other elements of the unit, as required during multiplication.

The bus configuration can be used to close an otherwise unclosed loop, or to shorten the effective length of a loop processing unit. For instance, the ten bit processing unit 22 in Fig. 4 can be used as an eight bit unit by configuring two of its processing elements as buses.

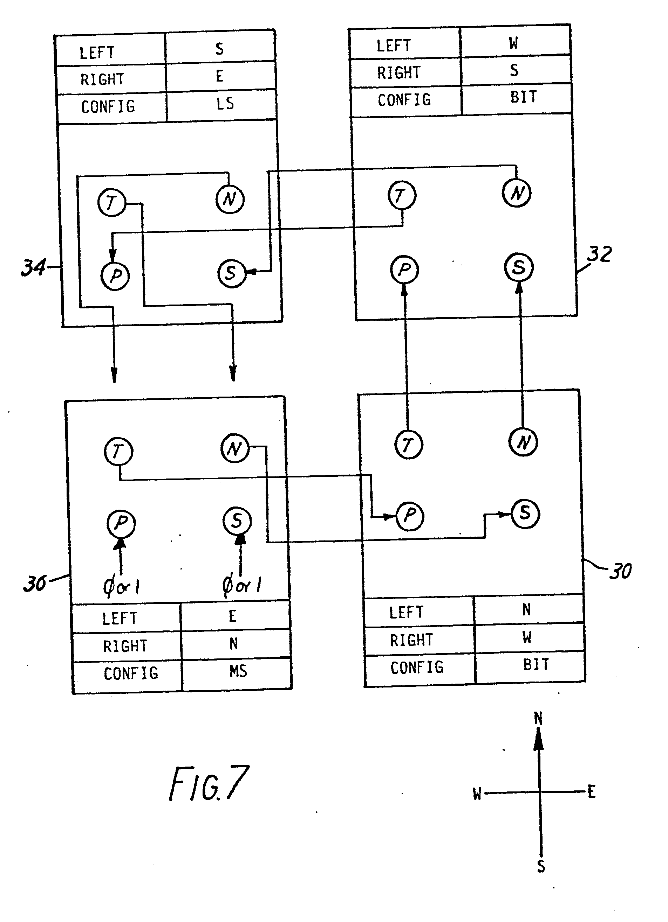

The configuration code is effective when global instructions command the use of the connection network between the processing elements, for instance for shifting operations and ripple carry addition. Figs. 7 to 12 show some of the types of closed loop processing elements which can be constructed by global instructions whose effect is modified by the configuration code.   These figures
are schematic and only show the connections between processing
elements.   Each connection between processing elements is two bits
wide.   When data is passing between elements, each element receives
an input bit on each of the one-bit buses P and S, and supplies an
output bit via each of the one-bit buses T and N.   Carry data or
operand data may be passed between connected elements.

A table is shown in each processing element to indicate the
contents of the stores storing the direction selection codes and the
configuration code.   The contents of the "left" and the "right"
stores indicate the input direction to be selected for a left or
right shift of data.   The terms left shift and right shift refer to
the change of significance of bits of data during a shift, by
analogy with normal binary notation.   A left shift moves data
towards the most significant end of a processing unit.   A right
shift moves data towards the least significant end of the processing
unit.   The symmetry of the arrangement provides that the "right"
store stores the output direction for a left shift and the "left"
store stores the output direction for a right shift.   The contents
of the store labelled "config" indicate the configuration code
configuring elements as least significant bit processors (LS), most
significant bit processors (MS) or interior bit processors (bit).

Fig. 7 shows the connections made between processing elements
upon receipt of a global instruction to perform a right shift of
data non-cyclically around the ring.   That is, in elements 30,32
with the configuration code "bit", the contents of "left" are used as
the output direction selection code and the contents of "right" as
the input direction selection code.

Element 34 has the configuration code "LS".  It takes its input
from element 32, in view of the direction selection code stored in
"right", but its output is discarded because the shifting is non-
cyclic.   That is, no direct communication is required between the
least and most significant bits.

Element 36 has the configuration code "MS" and provides an
output to element 30 under the control of the direction selection
code stored in "left", but takes as its input a bit (0 or 1) set by
the function generator circuits 56, 58 under the control of the global control circuit.

The overall effect of the instruction, interpreted by the configuration codes stored in the elements, is for the composite processing unit formed by the elements 30, 32, 34, 36 to shift data non-cyclically towards the least significant bit.

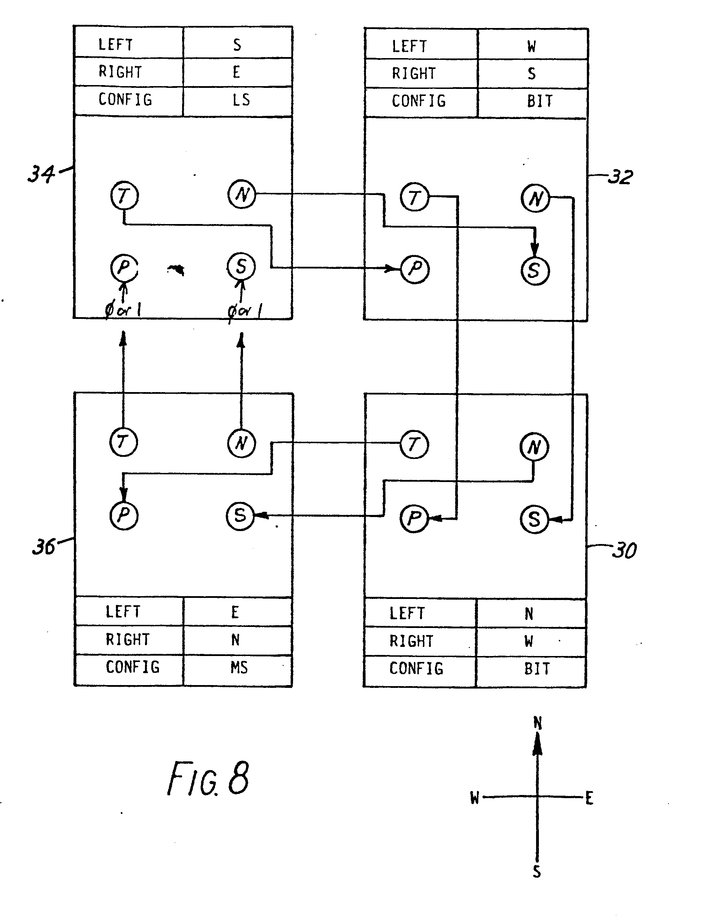

Fig. 8 shows the same processing element as Fig. 7, upon receipt of a global instruction to perform a non-cyclic left shift. In this case, elements 30, 32 and 36 take the contents of "left" as the input direction selection code. The elements 30, 32 and 34 take the contents of "right" as the output direction selection code. The output of the most significant element 36 is discarded. The input of the least significant element 34 is set by global control.

The overall effect of the instruction is to shift data non-cyclically towards the most significant end of the processing unit.

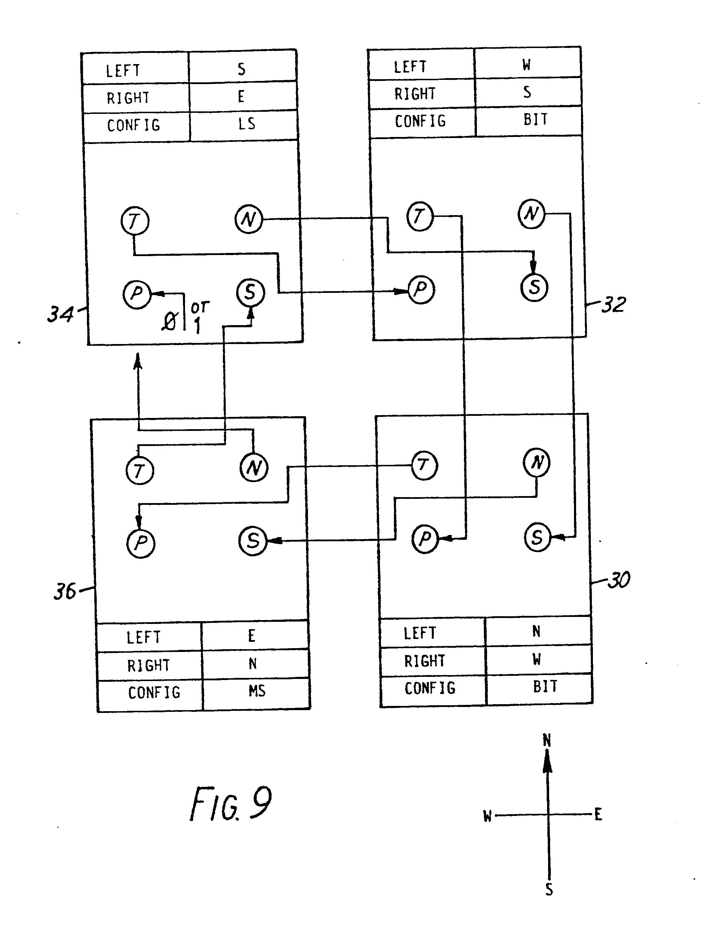

Fig. 9 shows the same processing unit receiving a global instruction to shift data to the left and non-cyclically. The operation shown in Fig. 9 differs from that shown in Fig. 8 in one important respect. The output of the element 36 on the 'T' line is not discarded, but is applied to the 'S' input of the least significant element 34. The 'N' output of element 36 is discarded. In all other connections shown in Fig. 9, 'T' outputs are applied to 'P' inputs and 'N' outputs are applied to 'S' inputs. Within all four elements 30, 32, 34, 36, data received on 'P' and 'S' inputs is passed to 'T' and 'N' outputs respectively. In other circumstances it may be appropriate to send data received on 'P' and 'S' inputs to 'N' and 'T' outputs, respectively.

The effect of these connections is that data set by the global control circuits at the 'P' input of the least significant element 34 travels twice around the processing unit before being discarded on leaving the 'N' output of the most significant element 36. The first circuit around the unit follows the route from 'P' inputs, internally of elements to 'T' outputs, then over connections to the next 'P' input and so on until leaving the 'T' output of the element 36. The data then commences its second circuit, from 'S' inputs, internally to 'N' outputs, then over connections to the next 'S' input and so on until being discarded on leaving the 'N' output of the element 36.

The effect of the operation is to perform a non-cyclic, double-length, left shift on the data in the processing unit.   Double-length shifting is important, for instance when performing multiplication.

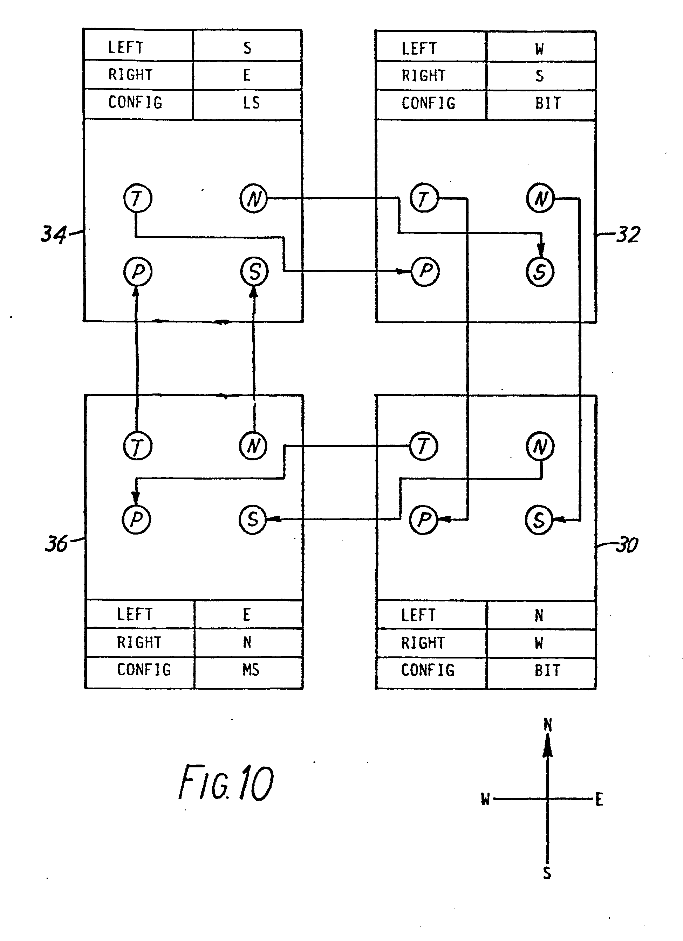

Fig. 10 shows the processing unit operating in the same way as described in relation to Fig. 8, except that the global instruction specifies cyclic shifting, and so the 'T' and 'N' outputs of the most significant bit 36 are supplied to the 'P' and 'S' inputs respectively of the least significant bit 34.   The effect is that data in the unit undergoes a cyclic left shift.

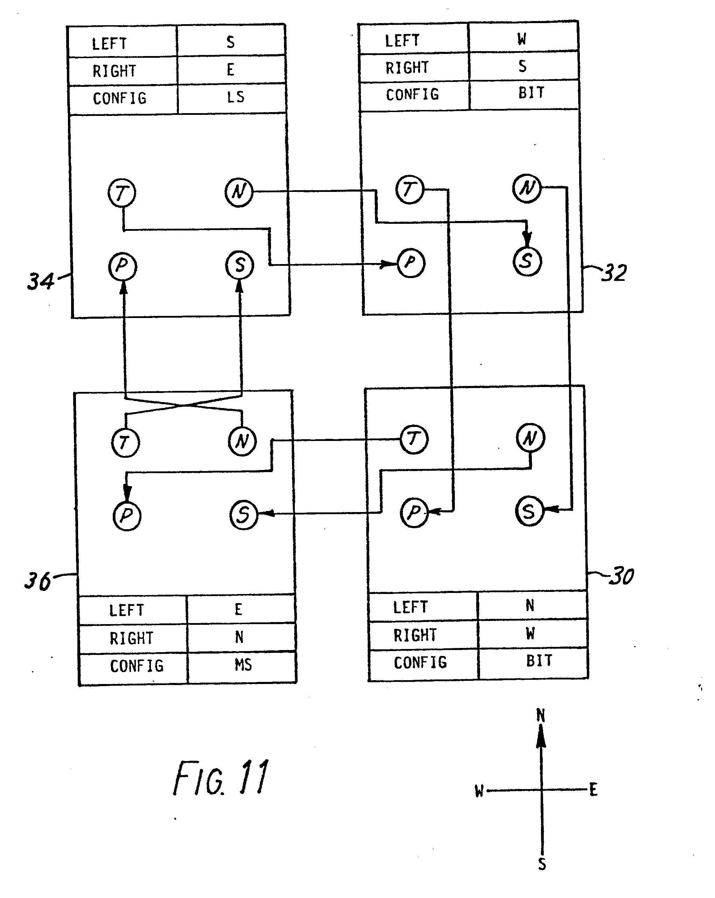

Fig. 11 differs from Fig. 10 in that the 'T' and 'N' outputs of the most significant element 36 are instructed by the global instruction to be applied to the 'S' and 'P' inputs respectively of the least significant element 34, rather than to the 'P' and 'S' inputs respectively.   Accordingly, the data in the unit undergoes a cyclic, double-length, left shift.

It may be desirable under other circumstances to include another register in the shift path, for one or more of the shift operations.   For example the path may include the carry register at the least or most significant bit, in order to retain the data that is discarded by the instruction.

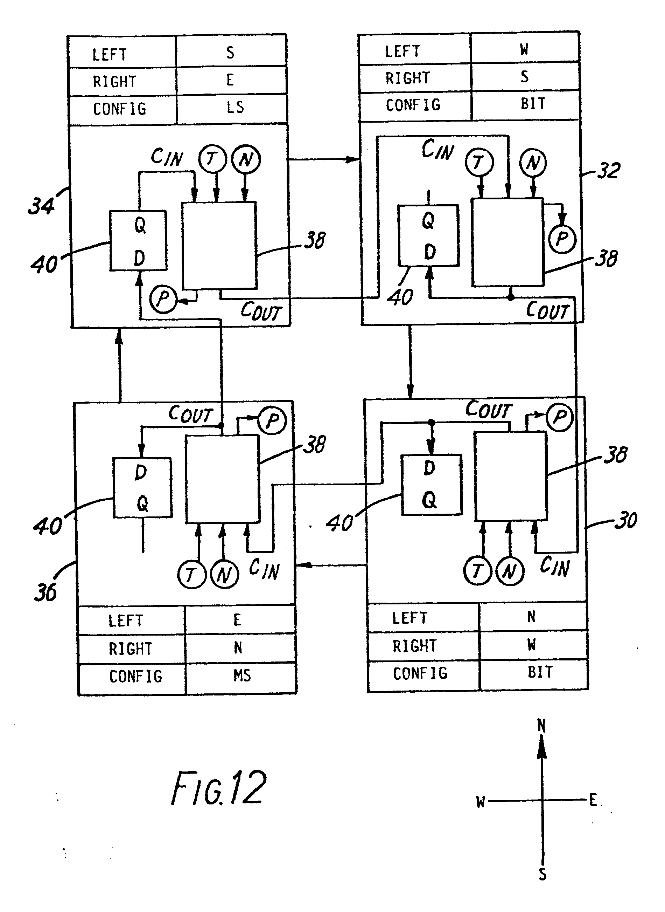

Fig. 12 shows the state of the processing unit upon receipt of an instruction to perform parallel or ripple-carry addition.   Each element acts as an adder circuit 38 which takes two operand inputs from the element memory over lines 'T' and 'N', and a carry, to produce result data and carry data.   The result data is written back to the memory over the output line 'P'.   The carry is passed to a neighbouring element.   The global instruction instructs carry propogation to the left (to the element processing the bit of next highest significance).   Thus, the contents of "right" are used as the output direction selection code and the contents of "left" are used as the input direction selection code.

The operation of the bit elements 30, 32 and the most significant element 36 is the same.   Each takes a carry from its left neighbour (processing the bit of next lowest significance) and performs an addition to generate a result, which is stored, and a carry, and provides the carry to its right hand neighbour.

The operation of the least significant bit is modified by the configuration code in one respect.   Each element 30, 32, 34, 36 comprises a carry store 40.   The least significant element takes its carry input from the carry store 40 and stores there a carry received from the most significant element 36.   In the other elements 30, 32, 36, generated carries are stored but not used. They need not be stored, but it is convenient to do so because they might be required for later, different operations.

Before the commencement of addition, the contents of the carry store 40 of the element 34 are set by the global control circuit. At the end of a single addition operation, the register 40 of the element 34 contains the carry from the element 36.   The register 40 can then be reset by the global control circuit if the unit is next to perform an unrelated addition operation.   Alternatively, the connection between the least and most significant elements 34 and 36 enables addition to be performed on words too long to be accommodated in the unit, in the following way.   Initially, the unit performs an addition of the four least significant bits of the operands.   This provides a result which is stored and one significant carry bit which is stored in the carry register 40 of the element 34.   A further addition operation can immediately be performed on the four operand bits of next highest significance. This operation can take account of the stored carry from the previous operation, so that the result produced, along with the result previously produced, taking due account of the significance of bits, represents the true sum of the operands.   Operands of any length may be operated on by this method of dividing the operands into four bit words, beginning at the least significant bit, and performing ripple-carry addition on the words sequentially, storing and taking acount of the carry produced by the previous addition of two words.

Fig. 13 shows a single processing element 41 in more detail.

Inputs from neighbouring elements arrive over two-bit input buses 42.   Direction selection means 44 selects one of the input buses 42, under logical control to be described later, to be connected to the bus 46 for the transmission of data into the interior of the element 41.   The input is divided into its components and can pass over buses P and S to memory.

Operands can be read from memory onto two buses T, N, where they can be supplied to output direction selection means 48. The output direction selection means 48 select one of the output buses 50 for onward transmission of the output to the corresponding neighbouring element.

Two other types of output data are possible. A carry output may arrive over the line 51, or the received input may be sent directly to the output, over the bus 52. The bus 52 is used when the element is in the "bus" configuration described above.

One of the three possible outputs is selected under the control of three logical signals labelled $e_6$, $e_5$ and $B_u$, which open and close respective gates 54.

Operands on the buses labelled T and N are also supplied to a primary function generator 56, a secondary function generator 58 and a carry kill function generator 60. The function generators 56 and 58 are controlled by 4-bit global control signals arriving over control buses FP and FS. Consequently, each may perform a total of 16 different functions.

The output of the primary and secondary functional units, when performing logical operations, is selected by the switch 59 onto the buses P and S respectively, for storage without further processing. If required, results can subsequently be read onto buses T and N and transmitted to another element.

The primary and secondary circuits 56, 58 work together to perform arithmetic functions. The result is applied to an exclusive OR gate 62 which combines it with a carry bit arriving over the line 64 to generate a final result. The final result is sent to storage over the bus P.

The carry bit is provided either from a Carry register 66 or from a neighbouring element, according to the setting of the switch 68.

The new carry is generated by a carry generator 70 under the control of the primary and secondary function generators 56, 58 and the carry kill function generator 60. The carry register may be loaded either from the carry generator 70 or by a neighbouring element, according to the setting of the switch 72.

Since two buses P, S are available for writing to the element's memory, but arithmetic operations only generate a single result bit, it is convenient to provide an input (RAM input) from memory in the global control unit, so that the spare capacity of the S bus can be used to read in fresh data while a result is being stored over the bus P.

Control of the operation of the element 41 is provided in the following way. Twelve-bits of control information arrive from the global control circuit. Four of these bits arrive over the bus FP and another four over the bus FS. The remaining four, labelled $I_o$, $I_1$, $I_2$ and $I_3$, form a global instruction word which specifies the type of operation to be performed, for instance one of those described with relation to Figs. 7 to 12. The bits have the following significance:

Table 2

| $I_3$ | Arithmetic and logical = 0 | | | | Shift = 1 | | | |
|---|---|---|---|---|---|---|---|---|
| $I_2$ | logical = 0 | | Arithmetic = 1 | | Plane = 0 | | cyclic = 1 | |
| $I_1$ | global = 0 | local = 1 | carry save add = 0 | ripple carry add = 1 | single length = 0 | double length = 1 | single length = 0 | double length = 1 |
| $I_0$ | right = 0 / left = 1 | | | right = 0 / left = 1 | right = 0 / left = 1 | right = 0 / left = 1 | right = 0 / left = 1 | right = 0 / left = 1 |

Six further bits of control information are stored in the associated memory and are individually set for each processing element. Two bits represent the address to the "left" element (as discussed above in relation to Figs. 7 to 12) and two more represent the address of the "right" element. These are stored in registers labelled "left" and "right" in Fig. 13. The contents of "left" and "right" are applied one to the input direction selection means 44 and one to the output direction selection means 48 depending on the state of the switch 74. Thus, the direction of data flow around a ring processing unit can be reversed simply by changing the state of the switch 74 in each element. The state of the switch 74 is set by $I_o$.

The final two bits of control data C0 and C1 are stored in the configuration register labelled "configuration" in Fig. 13. C0 and C1 have the following significance:

Table 3

| $C_1$ | interior = 0 | | edge = 1 | |
|---|---|---|---|---|
| $C_o$ | bus = 0 | bit = 1 | LS = 0 | MS = 1 |

$I_o$, $I_1$, $I_2$, $I_3$, $C_o$ and C1 are combined by logic circuits (not shown in the drawings) to generate the remaining control signals required in the element, according to the following equations:

$$In = \overline{C_o}C_1 I_o + C_o C_1 \overline{I_o}$$
$$Bu = \overline{C_o}\overline{C_1}$$
$$e_o = \overline{I_3} + I_3\overline{I_2}\overline{I_1}In$$
$$e_1 = \overline{I_3} + I_3\overline{I_2}In$$
$$e_2 = \overline{I_3}I_2 I_1 In$$
$$e_3 = \overline{I_3}I_2$$
$$e_4 = \overline{I_3}I_2 I_1 In$$
$$e_5 = \overline{I_3}I_2 I_1$$
$$e_6 = I_3 + \overline{I_1}$$

The condition "In" represents the condition in which data enters one end of a processing unit (or is set by global control). This becomes significant for an element during ripple carry addition, for example, if the element is configured as the least significant element of a unit and the carry is to the left (in terms of data significance) or if the element is the most significant and the carry direction is to the right, and similarly during shift operations. The carry store 66 is loaded from the carry generator 70 unless a ripple add is being performed and the "In" condition is true. Otherwise during ripple carry, the received carry bypasses the carry register 66 through the switch 68.    The carry out is passed directly to the output over the line 51.

The global logical function, executed when $I_3 = I_2 = I_1 = 0$, is chosen when the array is constructed.    It is a function built into the hardware of the connections between the processing elements, and can operate on data passing through elements configured as buses. The function can be chosen so that the connections form a multi-input logic gate.    If the array is built in NMOS technology, the global function can conveniently be the NOR function.    In bipolar technology, the OR or AND function might be used.

Although the processing element described above uses direction selection means to select both the input and the output directions, the invention could be performed with only one direction selection means selecting either the input or the output direction.    In that case, output would be transmitted or input accepted respectively from all directions.

The described connections between elements are each 2 bits wide, and each processing element comprises two function generators under individual control.    These numbers could be varied.    In particular, the array could be simplified by providing a single function generator in each element, one bit data paths between elements and one one-bit bus for loading the element's memory. Naturally, the processing power of the elements would be weaker, and software would become more complex.

The above description and the drawings refer to and show elements on a square lattice.    For practical reasons, it may not be desirable or possible to build an array with processing elements laid out geometrically.    The term 'square lattice' and other geometrical terms used are intended to refer equally to an array whose layout is topologically equivalent to the one shown and described, as they refer to the layout shown and described.

CLAIMS

1.    A processor array (16) comprising a plurality of processing
elements (12,18,41), each capable of combining operands to produce
results and carry data, control means (67) operable to control the
processing elements by supplying single instructions to all of the
elements simultaneously, and a connection network (14,42,50)
connecting each processing element to a plurality of other
processing elements for the trans-mission of data between elements,
characterised in that each element can send operands or carry data,
selectively, to any other element to which it is connected by the
connection network, and in that each element comprises storage means
(43a, left) for storing a direction selection code and direction
selection means (44) responsive to the contents of the storage means
to select the element from which transmitted data is accepted or the
element to which data is transmitted.

2.    A processor according to claim 1, characterised in that the
direction selection means (44) selects solely the element (12,18,41)
from which transmitted data is accepted.

3.    A processor array according to claim 1, characterised in that
the direction selection means (44) selects solely the element
(12,18,41) to which data is transmitted.

4.    A processor array according to claim 1, characterised in that
each processing element (12,18,41) comprises further storage means
(43b, right) for storing a further direction selection code, and
further direction selection means (48) responsive to the further
direction selection code, and in that the direction selection means
(44,48) of each processing element select the element from which
data is accepted and the element to which data is transmitted in
dependence on the stored direction selection codes.

5.    A processor array according to claim 4, characterised in that
the direction selection means (44) and the further direction
selection means (48) respond to the contents of a respective one of the storage means and the further storage means selected in response
to a command from the control means, whereby the significances of
the direction selection code and the further direction selection
code may be interchanged.

6.    A processor array according to any preceding claim,
characterised in that each connection (14,42,50) between processing
elements (12,18,41) comprises two data paths, whereby connected
elements may exchange data in a single operation.

7.    A processor array according to any preceding claim,
characterised in that the processing elements (12,18,41) are interconnected by connections (14,42,50) extending in directions so
chosen that closed rings (22) of intercommunicating elements may be
formed by the operation of the direction selection means (44,48).

8.    A processor array according to any preceding claim,
characterised in that the processing elements (12,18,41) form a two-
dimensional array.

9.    A processor array according to claim 8, characterised in that
the processing elements (12,18,41) occupy positions which form a
square lattice.

10.   A processor array according to claim 9, characterised in that
each processing element (12,18,41) is connected to the four elements
which are its nearest neighbours on the lattice.

11.   A processor array according to any preceding claim,
characterised in that each data path (14,42,50) between processing
elements is more than one bit wide.

12.   A processor array according to any preceding claim,
characterised in that each processing element (12,18,41) comprises
memory means (45), a plurality of function generators (56,58)
operable to process operands read from the memory means to generate
respective results, and result buses (P,S) connecting respective function generators to the memory means for the storage of results.

13. A processor array according to claim 12, characterised in that each element (12,18,41) comprises a connection (RAM INPUT) between at least one result bus (S) and the control means (67), whereby the control means may write new data into the memory means (45) simultaneously as result data is written into the memory means over the other result buses (P).

14. A processor array according to any preceding claim, characterised in that each processing element (12,18,41) comprises a configuration store (CONFIGURATION) which stores an instruction from a set of configuration instructions, and com-prises means responsive to the stored configuration instruction to modify the response of the processing element to instructions from the control means, and in that respective configuration instructions determine whether a processing element acts as the most significant or the least significant portion of, or a portion of intermediate significance in a processing unit (20,22,26) formed by a chain of processing elements each of which communicates with the elements to either side of it in the chain.

15. A processor array according to claim 14, characterised in that a further configuration instruction causes processing elements (12,18,41) to transmit received data without processing.

16. A processor array according to claim 14 or 15, characterised in that the configuration instructions are encoded as two-bit binary words.

17. A processor array according to any preceding claim, characterised in that the or each direction selection code is a two-bit binary word.

18. A processor array according to any preceding claim, characterised in that each processing element (12,18,41) is a single-bit processor.

FIG. 1

FIG. 2

FIG.3

FIG.4

4/11

0208457

FIG.5

FIG.6

0208457

| LEFT | S |
|------|---|
| RIGHT | E |
| CONFIG | LS |

| LEFT | W |
|------|---|
| RIGHT | S |
| CONFIG | BIT |

34

32

| LEFT | E |
|------|---|
| RIGHT | N |
| CONFIG | MS |

36

∅ or 1   ∅ or 1

| LEFT | N |
|------|---|
| RIGHT | W |
| CONFIG | BIT |

30

FIG.7

N

W ———— E

S

0208457

| LEFT | S |
|------|---|
| RIGHT | E |
| CONFIG | LS |

| LEFT | W |
|------|---|
| RIGHT | S |
| CONFIG | BIT |

34

32

Ⓣ  Ⓝ

Ⓟ  Ⓢ

ø or 1    ø or 1

Ⓣ  Ⓝ

Ⓟ  Ⓢ

Ⓣ  Ⓝ

Ⓟ  Ⓢ

Ⓣ  Ⓝ

Ⓟ  Ⓢ

36

30

| LEFT | E |
|------|---|
| RIGHT | N |
| CONFIG | MS |

| LEFT | N |
|------|---|
| RIGHT | W |
| CONFIG | BIT |

*FIG. 8*

N

W——————E

S

FIG. 9

| LEFT | S |
|------|---|
| RIGHT | E |
| CONFIG | LS |

| LEFT | W |
|------|---|
| RIGHT | S |
| CONFIG | BIT |

34

32

| LEFT | E |
|------|---|
| RIGHT | N |
| CONFIG | MS |

| LEFT | N |
|------|---|
| RIGHT | W |
| CONFIG | BIT |

36

30

FIG.10

| LEFT | S |
|---|---|
| RIGHT | E |
| CONFIG | LS |

| LEFT | W |
|---|---|
| RIGHT | S |
| CONFIG | BIT |

34

32

36

30

| LEFT | E |
|---|---|
| RIGHT | N |
| CONFIG | MS |

| LEFT | N |
|---|---|
| RIGHT | W |
| CONFIG | BIT |

FIG. 11

N

W —— E

S

FIG.12

FIG.13